# EUROPEAN PATENT APPLICATION

(11) **EP 3 681 216 A1**
(43) Date of publication of application: **15.07.2020**
(21) Application number: 19150941.3
(22) Date of filing: 09.01.2019
(51) Int. Cl.: H04W 64/00

(54) **METHODS AND APPARATUSES FOR SIGNALING ESTIMATION METHOD OR CLASS IN A WIRELESS COMMUNICATIONS NETWORK**

(71) Applicant: Fraunhofer Gesellschaft zur Förderung der angewandten Forschung e.V., 80686 München (DE)
(72) Inventor: Perner, Bastian, 90408 NÜRNBERG (DE); Alawieh, Mohammad, 90443 NÜRNBERG (DE); Eberlein, Ernst, 91091 GROSSENSEEBACH (DE); Franke, Norbert, 91052 ERLANGEN (DE); Hadaschik, Niels, 81827 MÜNCHEN (DE)
(74) Representative: Groth & Co. KB

(57) **Abstract**

The embodiments herein relate to a method comprising: (701) sending a request message for at least one estimation class and/or at least one estimation method to at least one radio base station; (702) receiving or acquiring from said at least one radio base station, a message including information on at least one supported class and/or at least one supported method for estimation; and (703) signaling a required configuration message to said at least one radio base station. The embodiments also relate to a LMF (800), a gNB (1000), a UE (1100) and methods thereof.

## Description

### TECHNICAL FIELD

The present disclosure relates to the field of wireless communications, and in particular to methods and apparatuses for signaling estimation classes/methods (for positioning purposes).

### BACKGROUND

In wireless access systems such as LTE (Long Term Evolution), also known as the fourth generation (4G) third Generation Partnership Project (3GPP), positioning protocol (LPP) is employed to handle the protocol based transfer of positioning related communication between a User Equipment (UE)and a location server network node or instance, the eSMLC or SLP. Its extension LPPa specifies the protocol for positioning related data between the eNB and a location server network node or instance, the eSMLC or SLP. Both are defined since 3GPP Release 9. LPP uses transport layer services and LPPa messages are transmitted via S1AP layer services. LPP is the basis of control plane and of user plane messages for location services.

For example, LPP considers the transfer of RSTD measurements from the UE to the SMLC in the OTDOA mode via the air interface, which measurements are forwarded via LPPa messages to the SMLC.

The NR positioning protocol (NRPP) for the 5^{th} generation of mobile networks (5G) will be based in large parts on LPP. However, new methods necessitate a new signaling (e.g. protocol messages).

Different estimators provide also different (statistical) behavior of estimates, e.g. in terms of resolution, accuracy, precision, outliers, and bias. The knowledge of these properties enables the central positioning engine (UE, server, or network function, NF) to consider the provided estimates. Estimators themselves will not be specified in the standard and are implementation specific and will be therefore vendor specific. Additionally, several UE classes will refrain from using certain algorithms for example:
- low power/low complexity UEs will not use very complex and computation hungry estimation algorithms like e.g. MUSIC and ESPRIT, and
- high-end UEs may not have the necessity to use inaccurate, low complexity algorithms like the correlation with maximum peak search.
- Application specific implementations (e.g. UE for V2X, UE for industrial IOT) may tend to use algorithms best suited to the requirements of the application.

### SUMMARY

In view of the drawbacks disclosed earlier, there are provided methods and apparatuses for signaling at least a used method or a used class for timing and/or frequency estimation.

According to an aspect of an embodiment herein, there is provided a method comprising: sending a request message for at least one estimation class and/or at least one estimation method to at least one radio base station; receiving or acquiring from said at least one radio base station, a message including information on at least one supported class and/or at least one supported method for estimation; and signaling a required configuration message to said at least one radio base stations.

According to an exemplary embodiment, exchange of messages is conveyed over the LPP, NR Positioning Protocol A, NRPPa, and/or over the Xn interface.

According to an exemplary embodiment, receiving or acquiring from said at least one radio base station measurements which include Time OF Arrival, TOA, measurement(s) and/or Direction Of Arrival, DOA measurements.

According to another exemplary embodiment, when in a downlink direction, the method comprises requesting a measurement procedure used for TOA estimates or an estimator class from a User Equipment; and receiving a message from said UE including supported class; and sending a configuration setting message to the UE.

According to an exemplary embodiment, the configuration setting message includes a reporting factor that defines an Enhanced Reporting accuracy according to Subcarrier Spacing, SCS, FFT-length, NFFT, and a corresponding Estimator Class and wherein said configuration message including said reporting factor is further sent to said at least one radio base station.

According to an exemplary embodiment, the configuration message further comprises an estimator configuration and/or a distance of inclination point and peak which is depending on bandwidth and an upsampling factor.

According to yet another exemplary embodiment, the configuration message includes a field indicating the employed estimation method which may include one or more of: time correlation and peak detection, or frequency domain MUSIC.

According to yet another exemplary embodiment, the configuration message includes a field indicating an estimator class in terms of a numerical identifier.

According to another aspect of embodiments herein, there is provided a network node comprising a Location and Measurement Function (LMF) or a location server which may network node may reside in any suitable network part of a network e.g. a radio access network part and or a core network part or in a cloud. The network node comprising the LMF comprises a processor and a memory, said memory containing instructions executable by said processor whereby said the LMF or the network node is operative to perform the subject matter of at least previously method claims.

There is also provided a computer program comprising instructions which when executed on at least one processor of the network node according to claim 9, cause the at least said one processor to carry out the method according to at least claims 1-8.

According to an aspect of an embodiment herein, there is provided a method comprising: receiving a request message for at least one estimation class and/or at least one estimation method from a network node or a location server or a LMF; transmitting a message including information on at least one supported class and/or at least one supported method for estimation; and receiving a required configuration message from said network node or location server or LMF. The method may be performed by a radio network node or gNB and/or a UE.

According to an exemplary embodiment, exchange of messages is conveyed over the LPP, and/or NR Positioning Protocol A, NRPPa, and/or over the Xn interface.

According to an exemplary embodiment, transmitting measurements which include Time OF Arrival, TOA, measurement(s) and/or Direction Of Arrival, DOA measurements.

According to another exemplary embodiment, when in a downlink direction, the method comprises requesting a measurement procedure used for TOA estimates or an estimator class from a User Equipment; and receiving a message from said UE including supported class; and sending a configuration setting message to the UE.

According to an exemplary embodiment, the configuration setting message includes a reporting factor that defines an Enhanced Reporting accuracy according to Subcarrier Spacing, SCS, FFT-length, NFFT, and a corresponding Estimator Class

According to an exemplary embodiment, the configuration message further comprises an estimator configuration and/or a distance of inclination point and peak which is depending on bandwidth and an upsampling factor.

According to yet another exemplary embodiment, the configuration message includes a field indicating the employed estimation method that may include one or more of: time correlation and peak detection, or frequency domain MUSIC.

According to yet another exemplary embodiment, the configuration message includes a field indicating an estimator class in terms oof a numerical identifier.

According to another aspect of embodiments herein, there is provided a radio network node or a radio base station comprising a processor and a memory, said memory containing instructions executable by said processor whereby said the radio network node is operative to perform the subject-matter of at least previously method claims.

There is also provided a computer program comprising instructions which when executed on at least one processor of the radio network node according to claim 11, cause the at least said one processor to carry out the method according to at least claim 10.

According to an aspect of an embodiment herein, there is provided a method performed by a UE comprising: receiving a request message for at least one estimation class and/or at least one estimation method from a network node or a location server or a LMF; transmitting, a message including information on at least one supported class and/or at least one supported method for estimation; and receiving a required configuration message from said network node or location server or LMF.

According to an exemplary embodiment, exchange of messages is conveyed over the NR Positioning Protocol A, NRPPa or LPP.

According to an exemplary embodiment, transmitting measurements which include Time OF Arrival, TOA, measurement(s) and/or Direction Of Arrival, DOA measurements.

According to another exemplary embodiment, the method comprises sending a measurement procedure used for TOA estimates or an estimator class; and transmitting a message including supported class; and receiving a configuration setting message from a location server or a network node comprising a LMF.

According to an exemplary embodiment, the configuration setting message includes a reporting factor that defines an Enhanced Reporting accuracy according to Subcarrier Spacing, SCS, FFT-length, NFFT, and a corresponding Estimator Class

According to an exemplary embodiment, the configuration message further comprises an estimator configuration and/or a distance of inclination point and peak which is depending on bandwidth and an upsampling factor.

According to yet another exemplary embodiment, the configuration message includes a field indicating the employed estimation method that may include one or more of: time correlation and peak detection, or frequency domain MUSIC.

According to yet another exemplary embodiment, the configuration message includes a field indicating an estimator class in terms oof a numerical identifier.

According to another aspect of embodiments herein, there is provided a UE comprising a processor and a memory, said memory containing instructions executable by said processor whereby said the UE is operative to perform the subject-matter of at least previously method claim 10.

There is also provided a computer program comprising instructions which when executed on at least one processor of the UE according to claim 12, cause the at least said one processor to carry out the method according to at least claim 10.

An advantage with embodiments herein is that different estimators provide different (statistical) behavior of estimates, e.g. in terms of resolution, accuracy, precision, outliers, and bias and the knowledge of these properties enables the LMF central positioning engine to optimally consider the provided estimates.

Another advantage is that one or more existing positioning protocols for mobile communications networks is/are enhanced by indicating the used estimation methods or classes, which is not present in prior art networks.

Another advantage of embodiments herein is that signaling of an estimator class or a certain estimation method to be used by the UE ensures reaching a certain Service Level with respect to accuracy and/or power consumption with sufficient effort. Through different estimator classes various Service Level may be addressed. In heterogeneous eco-systems with heterogeneous infrastructure and/or heterogeneous UEs (and UE classes), the estimator class (or the estimator identifier) provides relevant and important information on the expected quality of measurements beyond local environment conditions like the SINR, LOS/NLOS and the multipath scenario.

Yet another advantage is that by signaling the used estimator, the LMF or location server may then consider different estimator properties like bias, characteristics of the statistical distribution of the timing error or complexity of the used estimator.

Additional advantages and benefits provided by the embodiments of the present disclosure will be described in the detailed description.

### DETAILED DESCRIPTION OF THE DRAWINGS

Examples of embodiments and advantages of the embodiments herein are described in more detail with reference to attached drawings in which:
- Figure 1: depicts an example of a TOA error of low class estimator and high class estimator in a channel environment.
- Figure 2: depicts exemplary service levels wherein examples of estimation classes are provided according to some embodiments herein.
- Figure 3: depicts an example of finer grain estimator classes
- Figure 4: depicts an example of class information message exchange over LPP or any suitable protocol according to an exemplary embodiment herein.
- Figure 5: depicts another example of class information message exchange over LPP or any suitable protocol according to another exemplary embodiment herein.
- Figure 6: illustrates and example of estimation accuracy for three estimation classes
- Figure 7: illustrates a flowchart of a method performed by a location server of a network node including a LMF, or a UE according to some exemplary embodiments herein.
- Figure 8: is a block diagram depicting a location server or a network node including a LMF according to exemplary embodiments herein.
- Figure 9: illustrates a flowchart of a method performed by radio network node or a radio base station (or gNB) to some exemplary embodiments herein.
- Figure 10: is a block diagram depicting a radio network node or gNB according to exemplary embodiments herein.
- Figure 11: is a block diagram depicting a UE according to some exemplary embodiments herein.

### DETAILED DESCRIPTION

In the following is presented in several scenarios a detailed description of the exemplary embodiments in conjunction with the accompanying drawings to enable easier understanding of the solution(s) described herein.

It should be emphasized that examples of signaling direction includes direction from/to the UE to/from the gNB, from the gNB to other gNBs, and from the gNB to the UE as well as from/to the UE or the gNB to/from the LMF (or a location server) belonging to a core network or said signaling may be performed by means of a cloud. The direction at hand depends among others on the choice of UE-based or network based (i.e. UE-assisted) locating and on whether uplink or downlink measurements are used.

Within the newly defined protocol messages, a field is defined indicating the employed estimation method (e.g. time correlation and peak detection, or frequency domain MUSIC) or an estimator class (high/medium/low resolution methods) in terms of a numerical identifier (or some other machine interpretable identifier). Signaling of an estimator class or a certain estimation method to be used by the UE can ensure reaching a certain Service Level [1] with respect to accuracy and/or power consumption with sufficient effort. Through different estimator classes various Service Level may be addressed. In heterogeneous eco-systems with heterogeneous infrastructure and/or heterogeneous UEs (and UE classes), the estimator class (or the estimator identifier) provides relevant information on the expected quality of measurements beyond local environment conditions like the SINR, LOS/NLOS and the multipath scenario.

If time differences (e.g. RSTD) are conveyed, also the identifier of the underlying timing estimator should be signaled in the corresponding new "estimator class" field within the protocol message of the transmission protocol. By signaling the used estimator, the LMF can then consider different estimator properties like bias, characteristics of the statistical distribution of the timing error or complexity of the used estimator.

Also Direction of Arrival (DoA) and Direction of Departure (DoD) estimates may be accompanied by their respective estimation method identifier to be signaled in the DoA/DoD estimation method/class field. Example of classes are codebook-based, beamforming, or superresolution method classes. Some are serving beam direction, best beam direction, beamforming vector based (Bartlett beamformer), and superresolution methods.

Additionally, classes may refer to a positioning subsystem if the position estimates from multiple local subsystems are fused to a final position.

Positioning subsystems in the sense of the embodiments here maybe e.g. (closed) inertia navigation systems (INS), a single-point locator (estimating the position from a single anchor e.g. a gNB using RTT and DoA), a local TDOA system based on a multi-TRP installation, a WiFi position estimate from fingerprinting or fine time measurements FTM. Especially, GNSS are another example of such positioning subsystems, which may by further subdivided into the classic, the BOK, and the RTK class. If abstracting from the physical world, systems with fundamentally different physical basis may refer to the same Positioning Class if they have similar characteristics in terms of e.g. characteristics, reliability, etc. The Positioning Class Identifier is then valid for RAT-dependent and RAT-independent position estimates.

The proposed solution may treat at least two localization architectures, UE-assisted and UE-based positioning. The embodiments herein are however not restricted to these two architectures. In case of a UE-assisted positioning procedure, a network node in the form of a Location Management/Measurement Function (LMF) may require measurements from different links between the User Equipment (UE) and one or more radio base stations (RBS) or gNBs. If the measurement procedures for certain links are not identical an additional positioning error (bias) may be introduced as different measurement procedures, e.g. TOA estimators, have different timing biases and different timing error sources. To overcome such error sources the LMF may make use of the knowledge on characteristics related to estimator/positioning classes.

### Estimator class for time and direction of arrival

Certain measures need to be satisfied by any estimation method to be sorted into an estimation class. These measures may be applied for positioning methods employing both timing and direction estimation based methods.

To define these measures, the requirements needed to be fulfilled by each class should be defined. Since the accuracy of these methods highly depends on the environment under test, the estimator is classified based on the channel characteristics of the environment of interest. For 3GPP, these environments may be generalized according to the Urban Macro, Dense Urban or indoor scenarios. The environments may also be defined for special use case like vehicle tracking or an industrial scenario. (Note: [2] defines a requirement on the performance that must be achieved by an LMU (location measurement unit). This is no more applicable in LTE and 5G due to the diverse and wide range of applications.

For a defined signal bandwidth and sampling rate, the requirements from the estimator may be defined by:

### Accuracy:

In an AWGN environment with no fading or multi-path, the timing error estimator shall be less than **[*Accuracy* Requirement]** T_{c} when the signal presence is correctly detected. Where T_{c} is the basic time unit in 5G and defined as *T*_{c}=1/(Δ*f*ₘₐₓ·*N*_{f})=0.5 ns where Δ*f*ₘₐₓ=480·10³ Hz and *N*_{f}=4096.

In 3GPP channel environments (like fast fading channels), the timing error estimator shall be less than [***Accuracy* Requirement**] T_{c} when the signal presence is correctly detected.

### Reliability

The estimator shall be capable of detecting the correct path, for at least [***Reliability* Requirement** %] of the location attempts, at the defined detection levels. E.g. the number of estimation outliers is a basis of this consideration.

### Critical Areas (optional)

Performance of estimator in critical areas with low SINR and bad channel conditions.

In the following a very coarse classification is proposed as an example:

### High Class

The high class estimator may be needed when high accuracy in challenging environments is required. Challenging environments may occur when LOS path or first cluster path is either not easily detectable or influenced with multipath components with relative low delay. (Remark: A high class estimator may even in some cases relax the bandwidth requirements to achieve certain accuracy level.)

As an example for the High Class, an estimator may employ rising edge detection of the first peak. High class methods could be complex to implement and may require additional estimator specific configurations (signal design or environment specific) for an optimum performance.

Certain estimators may use tracking instead of single-shot estimation. It could be beneficial to use tracking-based estimators in cases of periodic reference signal transmission to/from the UE. Signaling of estimation results may have different periodicity to lower the reporting overhead (but could also introduce additional latency by doing so).

### Medium Class

Medium Class is favorable for more "easy" environments, where the probability of LOS is high. A high accuracy possibly taking into account subsample resolution is achieved by less complex approaches compared to the high class. As an example for the Medium Class, a peak search estimator with oversampling, or a "Threshold method" may be given.

### Low Class

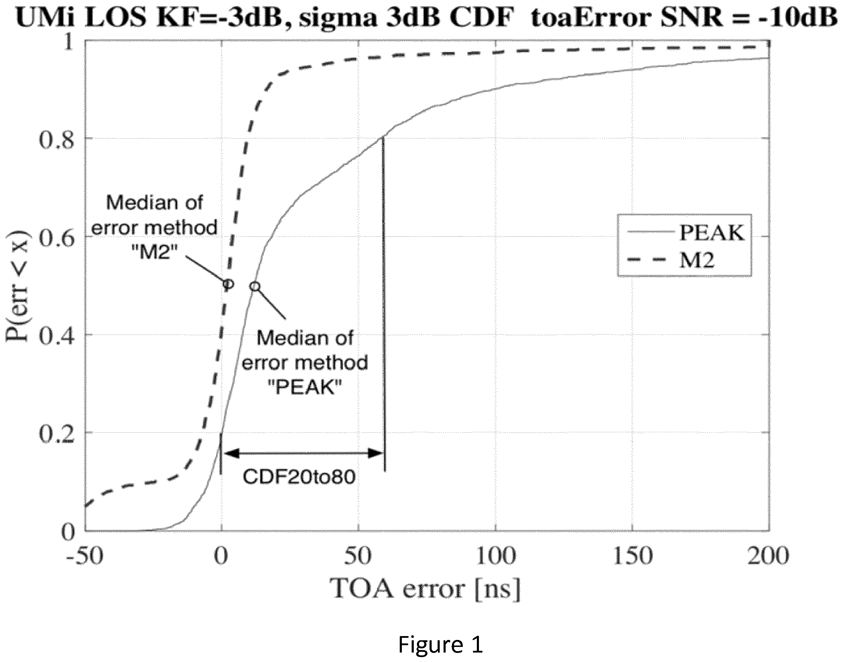

Normally chosen for low complexity reasons or when the required positioning service level is not demanding. A peak search estimator with no oversampling provides an example for the Low Class estimator. Figure 1 illustrates TOA error of low Class estimator and High class estimator in the same channel environment.

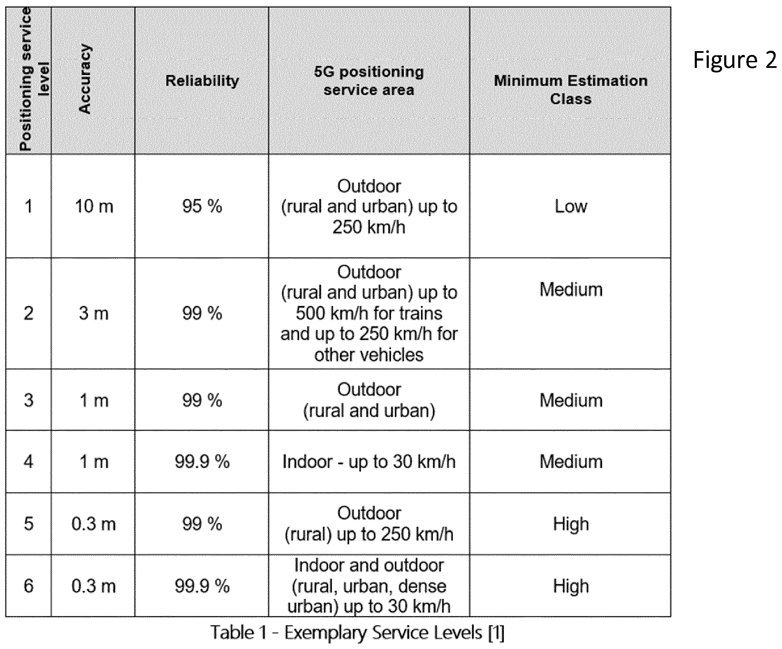

Examples of service levels are shown in Figure 2 depicting Table 1.

As an example, in Table 1 Estimation Classes are assigned to different Accuracy and/or Reliability Requirements. Also, according to some embodiments herein the estimation class or method may be provided as shown in column 5 of Figure 2. As an example minimum estimation class medium may be reported for a positioning service level 2, accuracy 3m, reliability 99%, outdoor up to 500km/h trains and up to 250 km/h for other vehicles. Hence, according to some embodiments herein, estimation classes may be signaled which define different level of service levels.

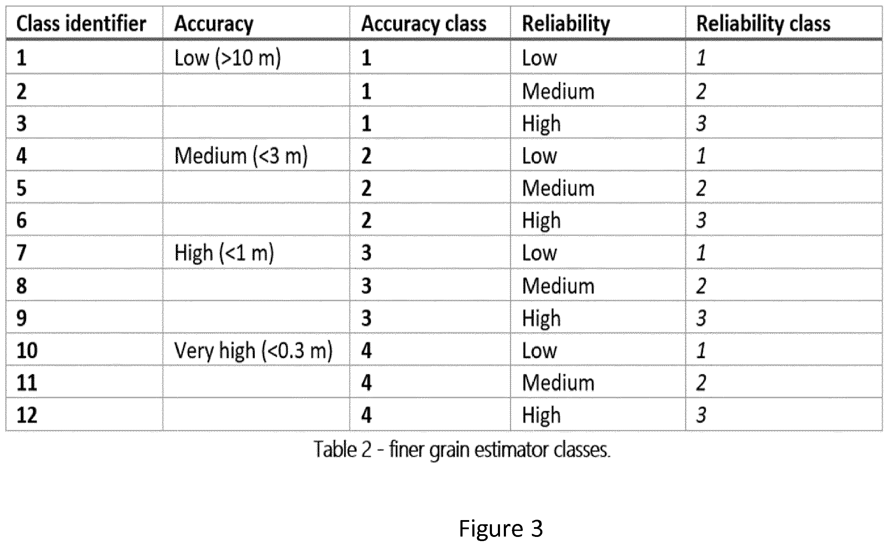

The exemplary embodiments are not limited to this coarse grain classification. E.g. other classifications may tend to independently consider accuracy and reliability in two classes or in one class. In the example in table 2 of Figure 3, either the tuple of Accuracy Class and Reliability Class may be conveyed or the joint Class Identifier (ranging

Both Table 1 and Table 2 are self-explanatory and need not be repeated in details.

For DoA, DoD and positioning estimator similar classification may apply.

### UE and gNB capabilities

### a. Uplink mode (gNB measures TOA/DOA and reports to LMF and/or serving gNB over NRPPa and/or Xn)

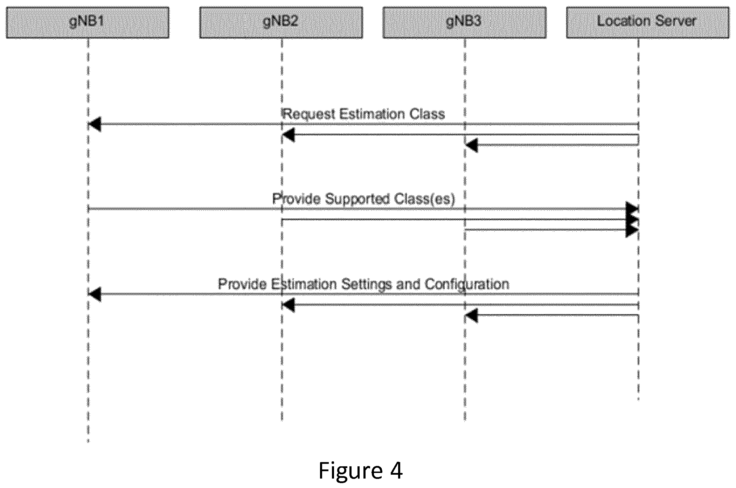

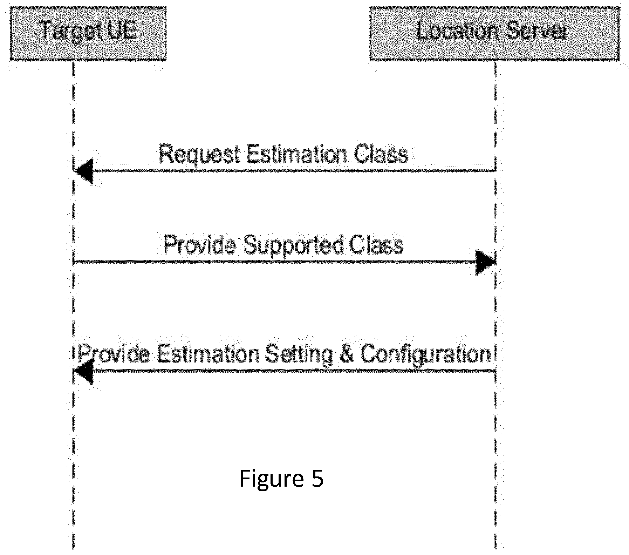

For an UL-TDOA method, it may happen that measurements from a gNB from different manufacturer are send to the LMF. Therefore, information about the estimation class is needed to use all measurements without introducing additional errors or to be aware of the error. The message exchange over the NRPPa is shown in Figure 4. The LMF sends a Request_Estimation_Class message to each concerned gNB. After receiving the requesting message, the gNBs may send back a Provide_Supported_Class message to the LMF. The LMF may signal the required Configuration via a Provide_Estimation_Setting message to the gNBs. Figure 5 illustrates an example of class information message exchange over LPP or any suitable protocol according to an exemplary embodiment herein.

### b. Downlink mode (UE measures TOA/DOA reporting to LMF over NRPP)

For a DL-TDOA method the LMF may require additional information on the measurement procedure used for the TOA estimates. Therefore, the UE may signal the used estimator or the used estimator class as shown in Figure 5 - Class information message exchange over LPP or any suitable protocol The LMF may send a Request_Estimation_Class Message to the Target UE. After receiving the Request Message, the UE sends back a Provide_Supported_Class Message to the LMF. The LMF signals the required Configuration via a Provide_Estimation_Setting Message to the UE.

### c. UE and gNB configuration

To achieve certain Service Levels the UE, respectively the gNBs, may need to be configured in a suitable manner. The following exemplary parameters might be configured for an exemplary measurement procedure:
- A Reporting Factor that defines the Enhanced Reporting accuracy according to Subcarrier Spacing (SCS), FFT-length (NFFT) and the corresponding Estimator Class : fac_{(SCS,NFFT)}
- Estimator specific configurations like for the WP-Method [3]: distance between Inclination Point and Peak depends on Bandwidth and Upsampling factor

### d. Reporting

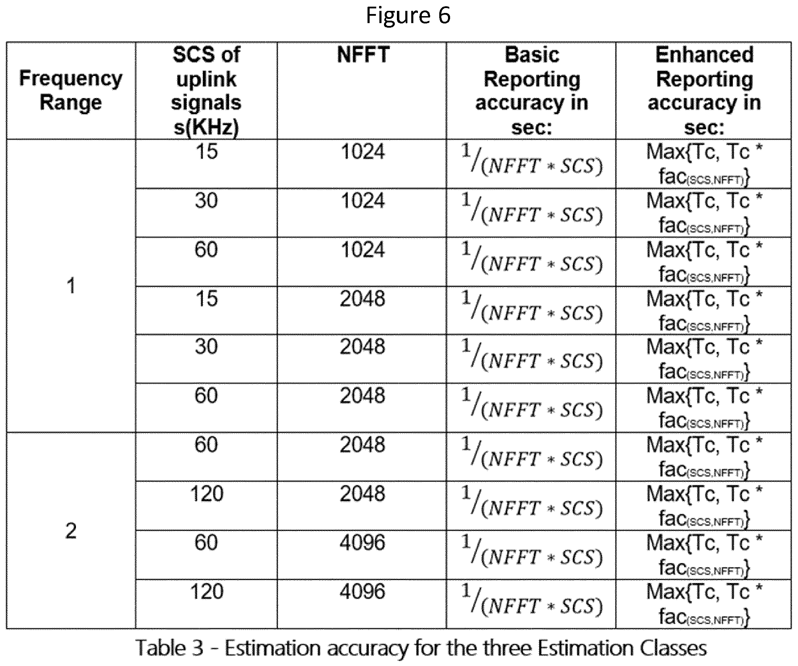

For a given Configuration of SCS, NFFT and Estimation Class the Reporting accuracy in seconds is given in Table 3 of Figure 6. Max{Tc, Ts* fac_{(SCS,NFFT)}} denotes the maximum of the of Tc and Tc* fac_{(SCS,NFFT)}, where Tc is the basic time unit in 5G and fac_{(SCS,NFFT} is the Reporting Factor, as described above. Table 3 in Figure 2 illustrates estimation accuracy for an example of three estimation classes.
Tc is the basic timing unit defined in 3GPP TS 38.211

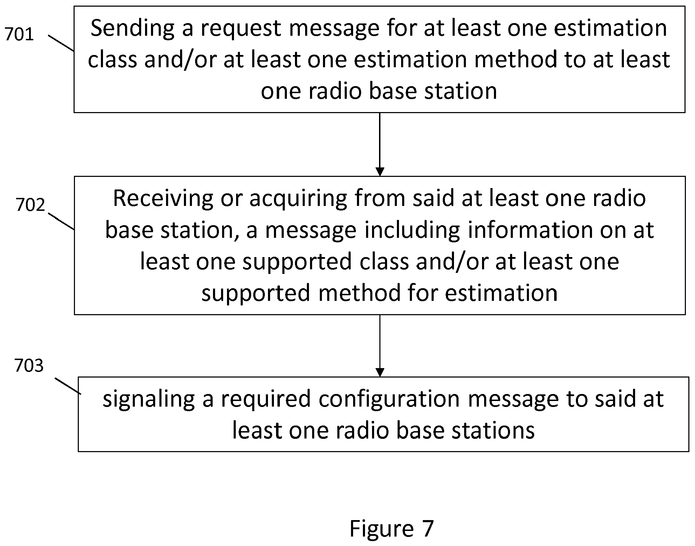

Referring to Figure 7, there is shown main steps performed by a network node such as LMF or location server or by a UE according to some embodiments herein. The method comprising:
(701) sending a request message for at least one estimation class and/or at least one estimation method to at least one radio base station;
(702) receiving or acquiring from said at least one radio base station, a message including information on at least one supported class and/or at least one supported method for estimation; and
(703) signaling a required configuration message to said at least one radio base stations.

As previously described, according to an exemplary embodiment, exchange of messages is conveyed over the NR Positioning Protocol A, NRPPa, and/or over the Xn interface.

According to an exemplary embodiment, receiving or acquiring from said at least one radio base station measurements which include Time OF Arrival, TOA, measurement(s) and/or Direction Of Arrival, DOA measurements.

According to another exemplary embodiment, when in a downlink direction, the method comprises requesting a measurement procedure used for TOA estimates or an estimator class from a User Equipment; and receiving a message from said UE including supported class; and sending a configuration setting message to the UE.

According to an exemplary embodiment, the configuration setting message includes a reporting factor that defines an Enhanced Reporting accuracy according to Subcarrier Spacing, SCS, FFT-length, NFFT, and a corresponding Estimator Class and wherein said configuration message including said reporting factor is further sent to said at least one radio base station.

According to an exemplary embodiment, the configuration message further comprises an estimator configuration and/or a distance of inclination point and peak which is depending on bandwidth and an upsampling factor.

According to yet another exemplary embodiment, the configuration message includes a field indicating the employed estimation method which may include one or more of: time correlation and peak detection, or frequency domain MUSIC.

According to yet another exemplary embodiment, the configuration message includes a field indicating an estimator class in terms of a numerical identifier.

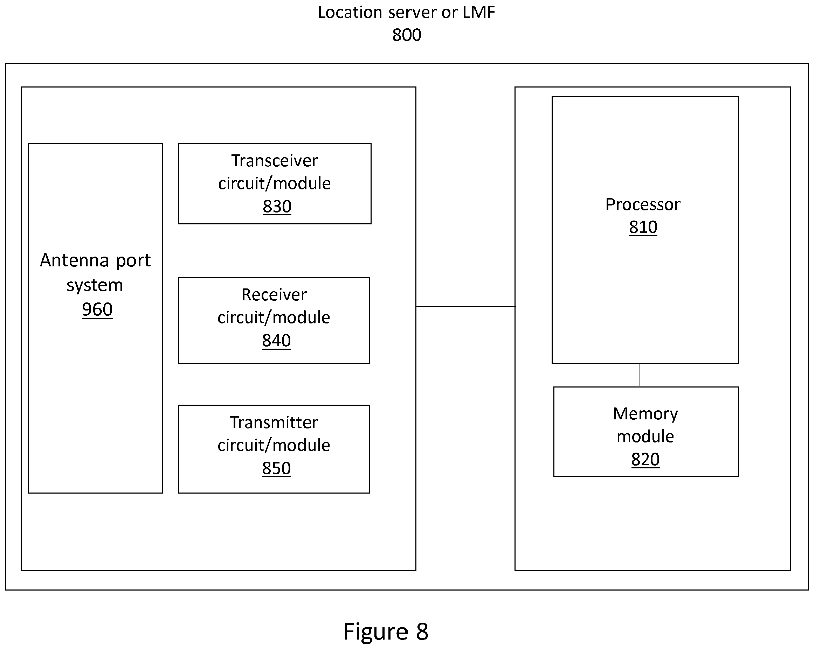

In order to perform the previously described process or method steps related to the network node or LMF or location server, some embodiments herein include a LMF. As shown in Figure 8, the LMF 800 comprises a processor 810 or processing circuit or a processing module or a processor or means 810; a receiver circuit or receiver module 840; a transmitter circuit or transmitter module 850; a memory module 820 a transceiver circuit or transceiver module 830 which may include the transmitter circuit 850 and the receiver circuit 840. The network node including the LMF 800 may further comprises an antenna system 860 which includes antenna circuitry for transmitting and receiving signals to/from at least the UE or to/from gNBs.

The network node 800 (incl. the LMF) may belong to any radio access technology including 2G, 3G, 4G or LTE, LTE-A, 5G, WLAN, and WiMax etc..

The processing module/circuit 810 includes a processor, microprocessor, an application specific integrated circuit (ASIC), field programmable gate array (FPGA), or the like, and may be referred to as the "processor 810." The processor 810 controls the operation of the network node 800 and its components. Memory (circuit or module) 820 includes a random access memory (RAM), a read only memory (ROM), and/or another type of memory to store data and instructions that may be used by processor 810. In general, it will be understood that the network node 800 in one or more embodiments includes fixed or programmed circuitry that is configured to carry out the operations in any of the embodiments disclosed herein.

In at least one such example, the network node 800 includes a microprocessor, microcontroller, DSP, ASIC, FPGA, or other processing circuitry that is configured to execute computer program instructions from a computer program stored in a non-transitory computer-readable medium that is in, or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed herein including anyone of method steps already described. Further, it will be appreciated that the network node 800 may comprise additional components not shown in Figure 8.

The network node or LMF 800 is configured to send a request message for at least one estimation class and/or at least one estimation method to at least one radio base station; to receive or acquire from said at least one radio base station, a message including information on at least one supported class and/or at least one supported method for estimation; and is further configured to signal a required configuration message to said at least one radio base stations.

As previously described, according to an exemplary embodiment, exchange of messages is conveyed over the NR Positioning Protocol A, NRPPa, and/or over the Xn interface.

According to an exemplary embodiment, the LMF 800 is configured to receive from said at least one radio base station measurements which include Time OF Arrival ,TOA, measurement(s) and/or Direction Of Arrival, DOA measurements.

According to another exemplary embodiment, when in a downlink direction, the method comprises requesting a measurement procedure used for TOA estimates or an estimator class from a User Equipment; and receiving a message from said UE including supported class; and sending a configuration setting message to the UE.

According to an exemplary embodiment, the configuration setting message includes a reporting factor that defines an Enhanced Reporting accuracy according to Subcarrier Spacing, SCS, FFT-length, NFFT, and a corresponding Estimator Class and wherein said configuration message including said reporting factor is further sent to said at least one radio base station.

According to an exemplary embodiment, the configuration message further comprises an estimator configuration and/or a distance of inclination point and peak which is depending on bandwidth and an upsampling factor.

According to yet another exemplary embodiment, the configuration message includes a field indicating the employed estimation method which may include one or more of: time correlation and peak detection, or frequency domain MUSIC.

According to yet another exemplary embodiment, the configuration message includes a field indicating an estimator class in terms of a numerical identifier.

Additional details on the functions and operations performed by the network node 800 (or LMF) have already been described and need not be repeated again.

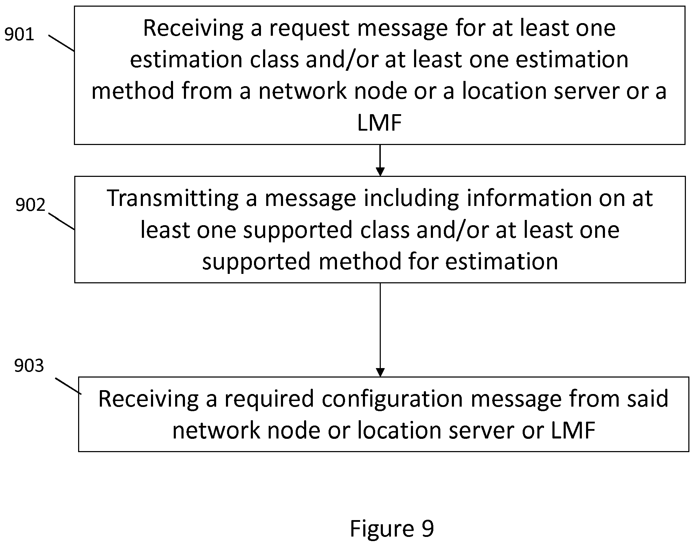

Referring to Figure 9 there is illustrated an example of main steps of a method performed by a radio network node such as a gNB. The method comprising:
(901) receiving a request message for at least one estimation class and/or at least one estimation method from a network node or a location server or a LMF;
(902) transmitting a message including information on at least one supported class and/or at least one supported method for estimation; and
(903) receiving a required configuration message from said network node or location server or LMF. The method may be performed by the radio network node or gNB and/or by a UE.

According to an exemplary embodiment, exchange of messages is conveyed over the NR Positioning Protocol A, NRPPa, and/or over the Xn interface.

According to an exemplary embodiment, transmitting measurements which include Time OF Arrival ,TOA, measurement(s) and/or Direction Of Arrival, DOA measurements.

According to another exemplary embodiment, when in a downlink direction, the method comprises requesting a measurement procedure used for TOA estimates or an estimator class from a User Equipment; and receiving a message from said UE including supported class; and sending a configuration setting message to the UE.

According to an exemplary embodiment, the configuration setting message includes a reporting factor that defines an Enhanced Reporting accuracy according to Subcarrier Spacing, SCS, FFT-length, NFFT, and a corresponding Estimator Class.

According to an exemplary embodiment, the configuration message further comprises an estimator configuration and/or a distance of inclination point and peak which is depending on bandwidth and an upsampling factor.

According to yet another exemplary embodiment, the configuration message includes a field indicating the employed estimation method which may include one or more of: time correlation and peak detection, or frequency domain MUSIC.

According to yet another exemplary embodiment, the configuration message includes a field indicating an estimator class in terms oof a numerical identifier.

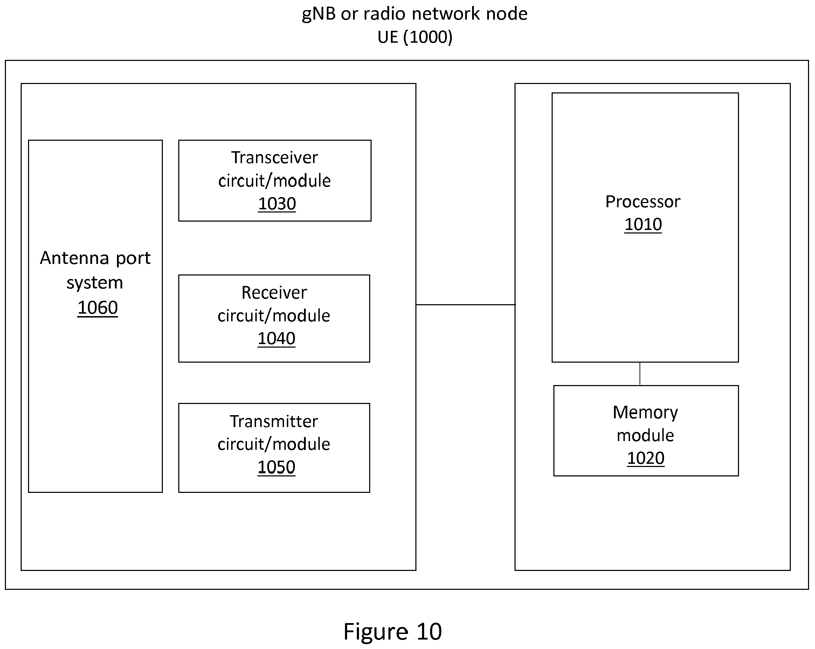

In order to perform the previously described process or method steps related to the radio network node or gNB, some embodiments herein include a gNB. As shown in Figure 10, the gNB 1000 comprises a processor 1010 or processing circuit or a processing module or a processor or means 1010; a receiver circuit or receiver module 1040; a transmitter circuit or transmitter module 1050; a memory module 1020 a transceiver circuit or transceiver module 1030 which may include the transmitter circuit 1050 and the receiver circuit 1040. The gNB 1000 may further comprises an antenna system 1060 which includes antenna circuitry for transmitting and receiving signals to/from at least the UE or to/from gNBs or to/from LMFs.

The gNB 1000 may belong to any radio access technology including 2G, 3G, 4G or LTE, LTE-A, 5G, WLAN, and WiMax etc.

The processing module/circuit 1010 includes a processor, microprocessor, an application specific integrated circuit (ASIC), field programmable gate array (FPGA), or the like, and may be referred to as the "processor 1010." The processor 1010 controls the operation of the gNB 1000 and its components. Memory (circuit or module) 1020 includes a random access memory (RAM), a read only memory (ROM), and/or another type of memory to store data and instructions that may be used by processor 1010. In general, it will be understood that the network node 1000 in one or more embodiments includes fixed or programmed circuitry that is configured to carry out the operations in any of the embodiments disclosed herein.

In at least one such example, the gNB 1000 includes a microprocessor, microcontroller, DSP, ASIC, FPGA, or other processing circuitry that is configured to execute computer program instructions from a computer program stored in a non-transitory computer-readable medium that is in, or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed herein including anyone of method steps already described. Further, it will be appreciated that the gNB 1000 may comprise additional components not shown in Figure 10.

The gNB or radio network node 1000 is configured to receive a request message for at least one estimation class and/or at least one estimation method from a network node or a location server or a LMF; transmit a message including information on at least one supported class and/or at least one supported method for estimation; and receive a required configuration message from said network node or location server or LMF.

Additional functions/operations performed by the gNB have already been disclosed and need not be repeated.

There is also provided a computer program comprising instructions which when executed on at least one processor of the gNB according to claim 11, cause the at least said one processor to carry out the method according to at least claim 10.

As previously described, there is also provided a method performed by a UE, the method comprising: receiving a request message for at least one estimation class and/or at least one estimation method from a network node or a location server or a LMF; transmitting, a message including information on at least one supported class and/or at least one supported method for estimation; and receiving a required configuration message from said network node or location server or LMF.

According to an exemplary embodiment, exchange of messages is conveyed over the NR Positioning Protocol A, NRPPa or any suitable protocol.

According to an exemplary embodiment, transmitting measurements which include Time OF Arrival, TOA, measurement(s) and/or Direction Of Arrival, DOA measurements.

According to another exemplary embodiment, the method comprises sending a measurement procedure used for TOA estimates or an estimator class; and transmitting a message including supported class; and receiving a configuration setting message from a location server or a network node comprising a LMF.

According to an exemplary embodiment, the configuration setting message includes a reporting factor that defines an Enhanced Reporting accuracy according to Subcarrier Spacing, SCS, FFT-length, NFFT, and a corresponding Estimator Class

According to an exemplary embodiment, the configuration message further comprises an estimator configuration and/or a distance of inclination point and peak which is depending on bandwidth and an upsampling factor.

According to yet another exemplary embodiment, the configuration message includes a field indicating the employed estimation method which may include one or more of: time correlation and peak detection, or frequency domain MUSIC. According to yet another exemplary embodiment, the configuration message includes a field indicating an estimator class in terms of a numerical identifier.

According to another aspect of embodiments herein, there is provided a UE 1100 comprising a processor 1110 and a memory 1120 , said memory containing instructions executable by said processor whereby said the UE is operative to perform the subject-matter of at least previously method claims.

There is also provided a computer program comprising instructions which when executed on at least one processor of the UE according to claim 12, cause the at least said one processor to carry out the method according to at least claim 10.

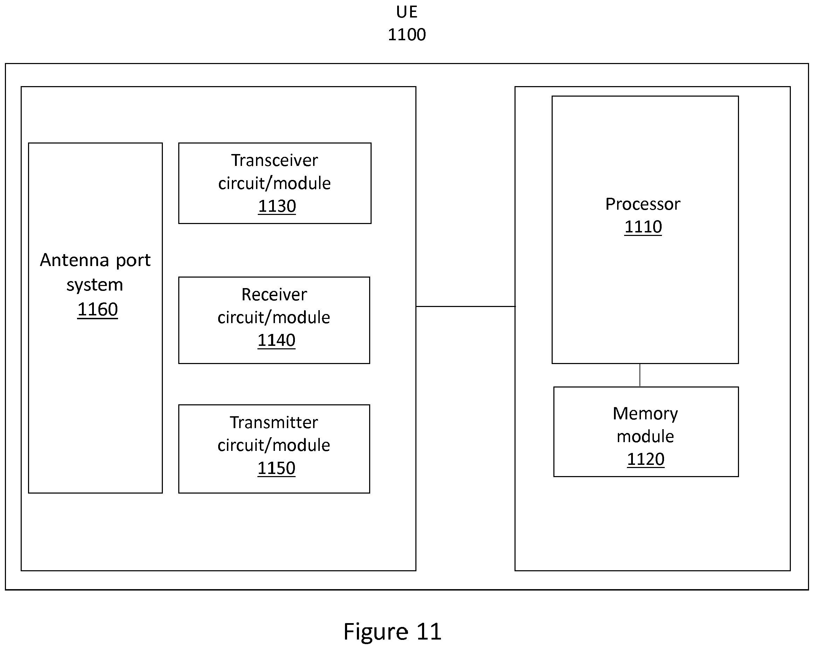

In order to perform the previously described process or method steps related to the radio network node or gNB, some embodiments herein include a UE 1100. As shown in Figure 11, the UE 1100 comprises a processor 1110 or processing circuit or a processing module or a processor or means 1110; a receiver circuit or receiver module 1140; a transmitter circuit or transmitter module 1150; a memory module 1120 a transceiver circuit or transceiver module 1130 which may include the transmitter circuit 1150 and the receiver circuit 1140. The UE 1100 may further comprises an antenna system 1160 which includes antenna circuitry for transmitting and receiving signals to/from at least the UE or to/from gNBs or to/from LMFs.

The UE 1100 may belong to any radio access technology including 2G, 3G, 4G or LTE, LTE-A, 5G, WLAN, and WiMax etc.

The processing module/circuit 1110 includes a processor, microprocessor, an application specific integrated circuit (ASIC), field programmable gate array (FPGA), or the like, and may be referred to as the "processor 1110." The processor 1010 controls the operation of the gNB 1000 and its components. Memory (circuit or module) 1120 includes a random access memory (RAM), a read only memory (ROM), and/or another type of memory to store data and instructions that may be used by processor 1110. In general, it will be understood that the UE 1100 in one or more embodiments includes fixed or programmed circuitry that is configured to carry out the operations in any of the embodiments disclosed herein.

In at least one such example, the UE 1100 includes a microprocessor, microcontroller, DSP, ASIC, FPGA, or other processing circuitry that is configured to execute computer program instructions from a computer program stored in a non-transitory computer-readable medium that is in, or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed herein including anyone of method steps already described. Further, it will be appreciated that the UE 1100 may comprise additional components not shown in Figure 11.

The UE 1100 is configured to receive a request message for at least one estimation class and/or at least one estimation method from a network node or a location server or a LMF or a radio base station; transmit a message including information on at least one supported class and/or at least one supported method for estimation; and receive a required configuration message from said network node or location server or LMF. Additional functions/operations performed by the UE have already been disclosed and need not be repeated.

As demonstrated, several advantages are achieved by the previously described exemplary embodiments. Below is a number of some of these advantages which provide technical effects:
An advantage with embodiments herein is that different estimators provide different (statistical) behavior of estimates, e.g. in terms of resolution, accuracy, precision, outliers, and bias and the knowledge of these properties enables the LMF central positioning engine to optimally consider the provided estimates.

According to another advantage, at least one existing positioning protocol for mobile communications networks is enhanced by indicating the used estimation methods or classes, which is not present in prior art networks.

Another advantage of embodiments herein is that signaling of an estimator class or a certain estimation method to be used by the UE ensures reaching a certain Service Level with respect to accuracy and/or power consumption with sufficient effort. Through different estimator classes various service level may be addressed and defined. In heterogeneous eco-systems with heterogeneous infrastructure and/or heterogeneous UEs (and UE classes), the estimator class (or the estimator identifier) provides relevant and important information on the expected quality of measurements beyond local environment conditions like the SINR, LOS/NLOS and the multipath scenario.

Yet another advantage is that by signaling the used estimator, the LMF or location server may consider different estimator properties like bias, characteristics of the statistical distribution of the timing error or complexity of the used estimator.

Throughout this disclosure, the word "comprise" or "comprising" has been used in a non-limiting sense, i.e. meaning "consist at least of". Although specific terms may be employed herein, they are used in a generic and descriptive sense only and not for purposes of limitation. The embodiments herein may be applied in any wireless systems including GSM, 3G or WCDMA, LTE or 4G, LTE-A (or LTE-Advanced), 5G, WiMAX, WiFi, satellite communications, TV broadcasting etc.

### 1 References

[1] 3GPP. R1-1811464, "NR positioning requirements for commercial use cases",
[2] 3GPP TS 38.211, "Physical channels and modulation (Release 15)," 3rd Generation Partnership Project; Technical Specification Group Radio Access Network, Version 15.3.0, September 2018.
[3] Hofmann, G.; Breiling, M.: Vorrichtung und Verfahren zum Bestimmen eines

## Claims

1. A method performed by a network node or a location server or a UE, the method comprising:
- (701) sending a request message for at least one estimation class and/or at least one estimation method to at least one radio base station;
- (702) receiving or acquiring from said at least one radio base station, a message including information on at least one supported class and/or at least one supported method for estimation; and
- (703) signaling a required configuration message to said at least one radio base stations.

2. The method according to claim 1 wherein exchange of messages is conveyed over the LTE Positioning Protocol, LPP, NR Positioning Protocol A, NRPPa, and/or over the Xn interface.

3. The method according to claim 1 or claim 2 wherein, receiving or acquiring from said at least one radio base station measurements which include Time OF Arrival, TOA, measurement(s) and/or Direction Of Arrival, DOA measurements.

4. The method according to anyone of claims 1-3 wherein, when in a downlink direction, the method comprises requesting a measurement procedure used for TOA estimates or an estimator class from a User Equipment; and receiving a message from said UE including supported class; and sending a configuration setting message to the UE.

5. The method according to anyone of claims 1-4 wherein, the configuration setting message includes a reporting factor that defines an Enhanced Reporting accuracy according to Subcarrier Spacing, SCS, FFT-length, NFFT, and a corresponding Estimator Class and wherein said configuration message including said reporting factor is further sent to said at least one radio base station.

6. The method according to claim 5 wherein the configuration message further comprises an estimator configuration and/or a distance of inclination point and peak which is depending on bandwidth and an upsampling factor.

7. The method according to claim 5 or claim 6 wherein the configuration message includes a field indicating the employed estimation method which may include one or more of: time correlation and peak detection, or frequency domain MUSIC.

8. The method according to anyone of claims 5-7 wherein the configuration message includes a field indicating an estimator class in terms of a numerical identifier.

9. A network node (800) comprising a Location and Measurement Function (LMF) or a location server, the network node comprising the LMF comprises a processor (810) and a memory (820), said memory (820) containing instructions executable by said processor whereby said the LMF or the network node (800) is operative to perform the subject-matter of at least previously method claims.

10. A method performed by a radio base station or a UE, the method comprising:
- (901) receiving a request message for at least one estimation class and/or at least one estimation method to a LMF;
- (902) transmitting a message including information on at least one supported class and/or at least one supported method for estimation; and
- (903) receiving a required configuration message from said LMF.

11. A radio network node (1000) comprising a processor (1010) and a memory (1020), said memory (1020) containing instructions executable by said processor whereby said radio network node (1000) is operative to perform the subject-matter of at least claim 10.

12. A User Equipment, UE, (1100) comprising a processor (1110) and a memory (1120), said memory (1120) containing instructions executable by said processor whereby said UE (1100) is operative to perform the subject-matter of at least claim 10.
